# DEMANDE DE BREVET EUROPEEN

(11) **EP 4 125 169 A1**
(43) Date de publication de la demande: **01.02.2023**
(21) Numéro de dépôt: 22181494.0
(22) Date de dépôt: 28.06.2022
(51) Int. Cl.: H02G 15/34, H01F 6/06, H01R 4/68, H01F 6/04, H02G 15/107, H02G 15/22

(54) **SYSTÈME DE CÂBLE SUPRACONDUCTEUR**

(30) Priorité: 27.07.2021 FR 2108138
(71) Demandeur: Nexans, 92400 Courbevoie (FR)
(72) Inventeur: DELPLACE, Sébastien, 59279 LOON-PLAGE (FR); LALLOUET, Nicolas, 62360 BAINCTHUN (FR)
(74) Mandataire: Ipsilon

(57) **Abrégé**

Ce système de câble supraconducteur comporte : un câble supraconducteur (1) ; une première enveloppe cryogénique (2) contenant le câble (1) ; un dispositif supraconducteur (8) connecté au câble (1) ; une seconde enveloppe cryogénique (7) contenant le dispositif supraconducteur (8) ; au moins une première terminaison (3) connectée au dispositif supraconducteur (8) ; une unité (4) de refroidissement connectée à l'au moins une première terminaison (3).

## Description

La présente invention se rapporte à un système de câble supraconducteur.

L'invention appartient au domaine des câbles électriques.

Durant de nombreuses années, plusieurs projets de systèmes de câbles supraconducteurs ont été développés et testés avec succès dans le monde entier. En parallèle, des dispositifs supraconducteurs tels que des limiteurs de courants de défaut supraconducteurs, des dispositifs de commutation supraconducteurs, des moteurs et des transformateurs supraconducteurs, etc., ont été développés en laboratoire ou à l'échelle industrielle.

Toutefois, ces deux technologies n'ont pas été fusionnées de façon à produire un système intégré complet.

Il existe donc un besoin de définir un agencement de système de câble supraconducteur capable de recevoir des dispositifs supraconducteurs de façon totalement intégrée.

La présente invention a pour but de remédier aux lacunes précitées de l'art antérieur.

Dans ce but, la présente invention propose un système de câble supraconducteur, caractérisé en ce qu'il comporte :
un câble supraconducteur ;
une première enveloppe cryogénique contenant le câble ;
un dispositif supraconducteur connecté au câble ;
une seconde enveloppe cryogénique contenant le dispositif supraconducteur ;
au moins une première terminaison connectée au dispositif supraconducteur ;
une unité de refroidissement connectée à l'au moins une première terminaison.

Ainsi, la présente invention permet une intégration complète du câble supraconducteur et d'un ou plusieurs dispositifs supraconducteurs dans un même système. Cela permet de réduire le coût de l'ensemble, notamment en raison de la réduction du nombre d'enveloppes cryogéniques mais également des coûts d'installation de génie civil, l'empreinte au sol étant réduite. En outre, cela simplifie l'utilisation du système de refroidissement, étant donné l'absence de double système de refroidissement ou l'absence de division du fluide de refroidissement. Par ailleurs, le dispositif supraconducteur peut être facilement débranché et remplacé par un autre dispositif, par exemple lors de l'amélioration du système. L'invention peut en outre permettre de réduire l'empreinte environnementale du système.

Dans un mode particulier de réalisation, le système comporte en outre un composant de gestion de champ électrique connecté à une première extrémité du câble.

Cela permet de réaliser la gestion du champ électrique après l'arrêt de l'écran du câble.

Dans un mode particulier de réalisation, le composant de gestion de champ électrique est contenu dans la seconde enveloppe cryogénique.

Dans un mode particulier de réalisation, le composant de gestion de champ électrique est un cône de condensateur.

Dans un mode particulier de réalisation, le système comporte en outre une ligne de transfert cryogénique connectant l'unité de refroidissement à l'au moins une première terminaison.

Dans un mode particulier de réalisation, les première et seconde enveloppes cryogéniques sont mutuellement connectées.

Dans un mode particulier de réalisation, le dispositif supraconducteur est connecté au câble par l'intermédiaire d'au moins une connexion électrique dédiée.

Dans un mode particulier de réalisation, l'au moins une connexion électrique dédiée est enfichable.

Cela permet de faciliter l'assemblage entre le câble et le dispositif supraconducteur.

Dans un mode particulier de réalisation, le système comporte en outre :
une seconde terminaison ;
une ligne retour de transfert cryogénique connectant l'unité de refroidissement à ladite seconde terminaison.

Cela permet la circulation du fluide cryogénique et le renouvellement de son refroidissement.

Dans un mode particulier de réalisation, l'unité de refroidissement est un circuit fermé.

En variante, l'unité de refroidissement est un circuit ouvert et le système comporte en outre un réservoir de stockage de froid relié à l'unité de refroidissement.

Dans un mode particulier de réalisation, l'au moins une première terminaison est connectée directement au dispositif supraconducteur.

Cette configuration est particulièrement avantageuse lorsque le dispositif supraconducteur peut difficilement être placé au milieu de la liaison du câble supraconducteur, notamment au cas où cela implique des travaux de génie civil trop onéreux ou si la liaison est entièrement enterrée.

En variante, l'au moins une première terminaison est connectée à une seconde extrémité du câble et à la première enveloppe.

Dans un mode particulier de réalisation, la seconde enveloppe cryogénique comporte une pluralité d'entrées adaptées à la connexion respective d'une pluralité de câbles supraconducteurs additionnels au dispositif supraconducteur, chacun des câbles supraconducteurs de la pluralité de câbles supraconducteurs étant équipé d'un composant additionnel de gestion de champ électrique.

Cela permet au dispositif supraconducteur de remplir la fonction de boîte de répartition.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une représentation schématique d'un système conforme à la présente invention, dans un premier mode particulier de réalisation ;
[Fig. 2] est une représentation schématique d'un système conforme à la présente invention, dans un deuxième mode particulier de réalisation ;
[Fig. 3] est une représentation schématique d'un système conforme à la présente invention, dans un troisième mode particulier de réalisation ;
[Fig. 4] est une représentation schématique d'un système conforme à la présente invention, dans un quatrième mode particulier de réalisation.

### Description de mode(s) de réalisation

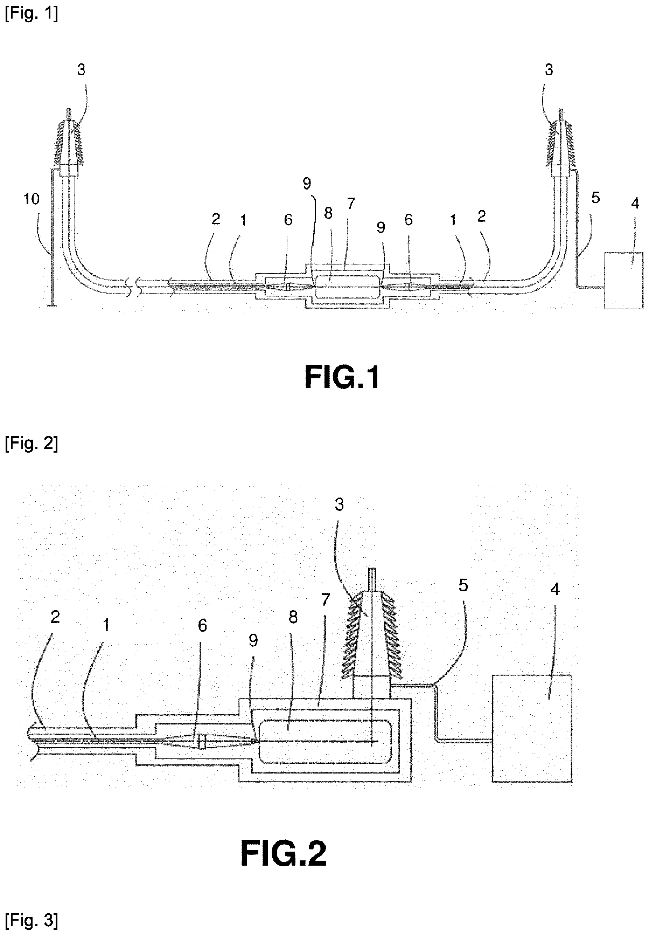

Comme le montre la figure 1, dans un mode particulier de réalisation, un système de câble supraconducteur conforme à la présente invention comporte un câble supraconducteur 1 et un dispositif supraconducteur 8 connecté au câble 1, par exemple par au moins une connexion électrique 9 dédiée.

Avantageusement, cette connexion électrique 9 est enfichable. Elle peut par exemple être normalisée et être identique quel que soit le dispositif supraconducteur 8 à connecter.

Le système comporte en outre une première enveloppe cryogénique 2 contenant le câble 1 et une seconde enveloppe cryogénique 7 contenant le dispositif supraconducteur 8.

Le système comporte également au moins une première terminaison 3 connectée au dispositif supraconducteur 8 et une unité 4 de refroidissement connectée à l'au moins une première terminaison 3.

L'unité 4 de refroidissement peut être connectée à la première terminaison 3 par l'intermédiaire d'une ligne 5 de transfert cryogénique dédiée, comprise dans le système.

La première terminaison 3 permet la transmission de courant et de tension de la température cryogénique à la température ambiante et peut être connectée à un réseau électrique ou à toute autre alimentation en courant.

Dans le mode de réalisation de la figure 1, la première terminaison 3 est connectée au dispositif supraconducteur 8 par l'intermédiaire du câble 1 et de la première enveloppe cryogénique 2, qui sont connectés, à une de leurs extrémités respectives, à la première terminaison 3 et, à leur autre extrémité respective, au dispositif supraconducteur 8.

A l'extrémité du câble 1 opposée à celle connectée à la première terminaison 3, le câble 1 est connecté à un composant 6 de gestion de champ électrique.

Dans le mode particulier de réalisation de la figure 1, ce composant 6 de gestion de champ électrique, qui permet la gestion du champ électrique après arrêt de l'écran du câble 1, est contenu dans la seconde enveloppe cryogénique 7 qui contient le dispositif supraconducteur 8 en étant enrobé dans celle-ci.

A titre d'exemple nullement limitatif, le composant 6 de gestion de champ électrique peut être un cône de condensateur ou une traversée ou tout autre composant jugé approprié.

La première enveloppe cryogénique 2 du câble 1 et la seconde enveloppe cryogénique 7 du dispositif supraconducteur 8 peuvent être mutuellement connectées, avantageusement via une interface normalisée, ce qui permet d'avoir une connexion similaire quel que soit le type d'enveloppe cryogénique.

L'agencement du système est symétrique de part et d'autre du dispositif supraconducteur 8 de façon à permettre la circulation de courant et de tension. Autrement dit, un segment du câble 1 et de son enveloppe cryogénique 2, ainsi qu'un composant 6 de gestion de champ électrique et une terminaison 3 sont connectés à chacune des deux extrémités du dispositif supraconducteur 8 et le système comporte en outre une ligne retour 10 de transfert cryogénique qui connecte l'unité 4 de refroidissement à une seconde terminaison 3, c'est-à-dire la terminaison 3 connectée à l'extrémité du dispositif supraconducteur 8 opposée à l'extrémité du dispositif supraconducteur 8 connectée à la première terminaison 3.

La ligne retour 10 de transfert cryogénique permet la circulation du fluide cryogénique et le renouvellement de son refroidissement.

Deux configurations sont possibles pour l'unité 4 de refroidissement : soit elle peut être en circuit fermé, c'est-à-dire que le fluide cryogénique est refroidi à nouveau pour être réinjecté, soit elle peut être en circuit ouvert, auquel cas le système comporte en outre un réservoir de stockage de froid, par exemple un réservoir de stockage de fluide cryogénique, qui est régulièrement rempli.

Le mode de réalisation de la figure 1 permet d'avoir une longue liaison de câble supraconducteur 1 entre deux points distants et intégrant directement un dispositif supraconducteur 8 tel qu'un limiteur de courant de défaut.

S'il est prévu une ligne de transmission longue de plusieurs kilomètres, la portion de câble supraconducteur 1 considérée peut être divisée en plusieurs segments reliés entre eux par des jonctions intermédiaires.

Néanmoins, grâce à ce mode de réalisation, les deux longueurs de câble supraconducteur 1 connectées au dispositif supraconducteur 8 peuvent également être extrêmement courtes : dans ce cas, le système peut être vu comme un dispositif supraconducteur autonome, prêt à être connecté à un réseau électrique ou à toute autre alimentation électrique.

La figure 2 montre un autre mode particulier de réalisation, dans lequel la seconde enveloppe cryogénique 7 fusionne directement avec la première terminaison 3 et/ou la seconde terminaison 3. Ainsi, la terminaison 3 est connectée directement au dispositif supraconducteur 8.

La liaison électrique entre le dispositif supraconducteur 8 et la terminaison 3 et au travers de celle-ci peut être résistive ou partiellement supraconductrice.

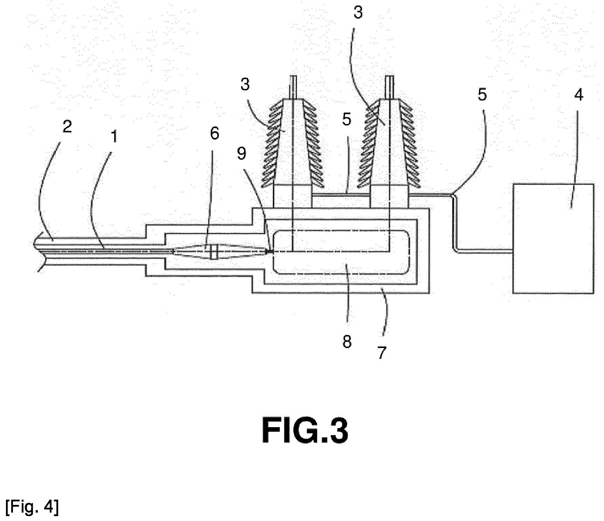

Comme le montre la figure 3, si le courant à transporter est très important, typiquement pour une transmission haute puissance, plusieurs terminaisons 3 peuvent être incluses dans la seconde enveloppe cryogénique 7. A titre d'exemple nullement limitatif, un système à 6 kA peut inclure deux terminaisons à 3 kA pour injecter le courant dans le dispositif supraconducteur 8.

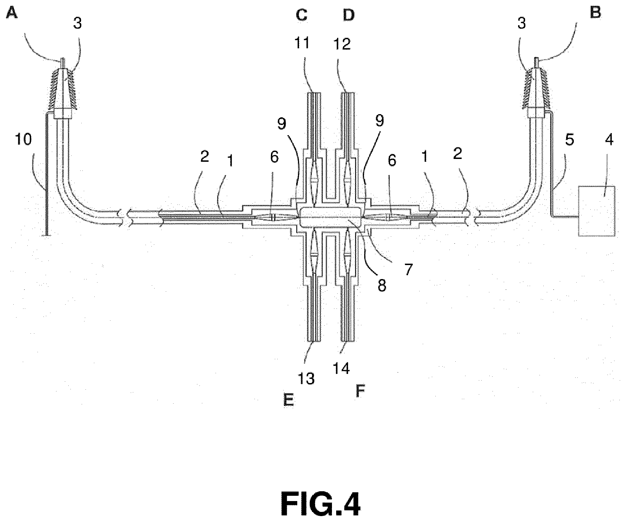

La figure 4 montre encore un autre mode particulier de réalisation, dans lequel la seconde enveloppe cryogénique 7 comporte une pluralité d'entrées, par exemple quatre entrées 11, 12, 13 et 14 dans la réalisation illustrée.

Un câble supraconducteur similaire au câble 1, équipé d'un composant de gestion de champ électrique similaire au composant 6, peut être connecté à chacune de ces entrées 11, 12, 13 et 14.

Le dispositif supraconducteur 8 peut alors agir comme une boîte de répartition. A titre d'exemple nullement limitatif, le dispositif supraconducteur 8 peut être un dispositif de commutation qui permet de transmettre l'énergie uniquement d'un point A à un point B, mais en offrant la possibilité de commuter partiellement ou exclusivement l'énergie vers un point C, D, E ou F.

Le nombre d'entrées du dispositif supraconducteur 8 peut être inférieur ou supérieur à celui qui est illustré sur la figure 4 et décrit ci-dessus.

## Revendications

1. Système de câble supraconducteur, **caractérisé en ce qu'**il comporte :
un câble supraconducteur (1) ;
une première enveloppe cryogénique (2) contenant ledit câble (1) ;
un dispositif supraconducteur (8) connecté audit câble (1) ;
une seconde enveloppe cryogénique (7) contenant ledit dispositif supraconducteur (8) ;
au moins une première terminaison (3) connectée audit dispositif supraconducteur (8) ;
une unité (4) de refroidissement connectée à ladite au moins une première terminaison (3).

2. Système selon la revendication 1, **caractérisé en ce qu'**il comporte en outre un composant (6) de gestion de champ électrique connecté à une première extrémité dudit câble (1).

3. Système selon la revendication 2, **caractérisé en ce que** ledit composant (6) de gestion de champ électrique est contenu dans ladite seconde enveloppe cryogénique (7).

4. Système selon la revendication 2 ou 3, **caractérisé en ce que** ledit composant (6) de gestion de champ électrique est un cône de condensateur.

5. Système selon l'une quelconque des revendications précédentes, **caractérisé en ce qu'**il comporte en outre une ligne (5) de transfert cryogénique connectant ladite unité (4) de refroidissement à ladite au moins une première terminaison (3).

6. Système selon l'une quelconque des revendications précédentes, **caractérisé en ce que** lesdites première et seconde enveloppes cryogéniques (2, 7) sont mutuellement connectées.

7. Système selon l'une quelconque des revendications précédentes, **caractérisé en ce que** ledit dispositif supraconducteur (8) est connecté audit câble (1) par l'intermédiaire d'au moins une connexion électrique (9) dédiée.

8. Système selon la revendication 7, **caractérisé en ce que** ladite au moins une connexion électrique (9) dédiée est enfichable.

9. Système selon l'une quelconque des revendications précédentes, **caractérisé en ce qu'**il comporte en outre :
une seconde terminaison (3) ;
une ligne retour (10) de transfert cryogénique connectant ladite unité (4) de
refroidissement à ladite seconde terminaison (3).

10. Système selon l'une quelconque des revendications précédentes, **caractérisé en ce que** ladite unité (4) de refroidissement est un circuit fermé.

11. Système selon l'une quelconque des revendications 1 à 9, **caractérisé en ce que** ladite unité (4) de refroidissement est un circuit ouvert et ledit système comporte en outre un réservoir de stockage de froid relié à ladite unité (4) de refroidissement.

12. Système selon l'une quelconque des revendications précédentes, **caractérisé en ce que** ladite au moins une première terminaison (3) est connectée directement audit dispositif supraconducteur (8).

13. Système selon l'une quelconque des revendications 1 à 11, **caractérisé en ce que** ladite au moins une première terminaison (3) est connectée à une seconde extrémité dudit câble (1) et à ladite première enveloppe (2).

14. Système selon l'une quelconque des revendications précédentes, **caractérisé en ce que** ladite seconde enveloppe cryogénique (7) comporte une pluralité d'entrées (11, 12, 13, 14) adaptées à la connexion respective d'une pluralité de câbles supraconducteurs additionnels audit dispositif supraconducteur (8), chacun des câbles supraconducteurs de ladite pluralité de câbles supraconducteurs étant équipé d'un composant additionnel de gestion de champ électrique.
